Europäisches Patentamt

European Patent Office

Office européen des brevets

(11) Veröffentlichungsnummer : **0 455 933 B1**

(12) **EUROPÄISCHE PATENTSCHRIFT**

(45) Veröffentlichungstag der Patentschrift :
08.06.94 Patentblatt 94/23

(21) Anmeldenummer : 91101017.1

(22) Anmeldetag : 26.01.91

(51) Int. Cl.⁵ : **C09C 1/00,** C09C 1/40,
C09C 1/34, C09C 1/22,
C09C 3/06

(54) Umhüllte Spinell-Farbpigmente, Verfahren zu ihrer Herstellung und Verwendung.

(30) Priorität : 10.05.90 DE 4014928

(43) Veröffentlichungstag der Anmeldung :
13.11.91 Patentblatt 91/46

(45) Bekanntmachung des Hinweises auf die
Patenterteilung :
08.06.94 Patentblatt 94/23

(84) Benannte Vertragsstaaten :
AT BE CH DE ES FR GB IT LI NL

(56) Entgegenhaltungen :
EP-A- 0 294 664
WORLD PATENTS INDEX LATEST Week 16,
1987 Derwent Publications Ltd., London,
GB;AN 87-114020/16
WORLD PATENTS INDEX LATEST 1986 Derwent Publications Ltd., London, GB; AN
86-244531/37

(56) Entgegenhaltungen :
AMERICAN CERAMIC SOCIETY BULLETIN.
Bd. 66, Nr. 11, November 1987, COLUMBUS
USSeiten 1600 - 1604; RICHARD A. EPPLER:
'Selecting ceramic pigments'
GLASS AND CERAMICS. Bd. 44, Nr. 3-4, April
1987, NEW YORK US Seiten 174 - 176;I.V.-
PISHCH ET AL.: 'Effect of mineralizers on the
physicochemical properties ofpigments'

(73) Patentinhaber : Degussa Aktiengesellschaft
Weissfrauenstrasse 9
D-60311 Frankfurt (DE)

(72) Erfinder : Speer, Dietrich, Dr.
Grünaustrasse 5
W-6450 Hanau 9 (DE)
Erfinder : Kiss, Akos, Dr.
Odenwaldstrasse 16
W-8755 Alzenau-Wasserlos (DE)
Erfinder : Kleinschmit, Peter, Dr.
Wildaustrasse 19
W-6450 Hanau 9 (DE)
Erfinder : Horst, Jenny
Lindenstrasse 10
W-6460 Gelnhausen (DE)

## Beschreibung

Die Erfindung betrifft umhüllte Spinell-Farbpigmente, deren Kern aus einem farbigen Spinell und deren Umhüllung aus einem silikatischen Material mit glasiger Struktur besteht. Die Erfindung richtet sich ferner auf die Herstellung der umhüllten Spinell-Farbpigmente sowie deren Verwendung zur Herstellung konturenscharfer keramischer Dekore.

Farbpigmente, welche zum Färben und Dekorieren von Porzellan. Steinzeug und anderen keramischen Erzeugnissen in Gegenwart von Glasfritten oberhalb des Erweichungspunktes der Glasfritte eingebrannt werden, müssen eine hohe Temperatur-, Oxidations- und Glasurbeständigkeit aufweisen. Zur Herstellung von Dekoren mit mehr oder weniger feinen Mustern werden inbesondere Dekorfarben, welche im wesentlichen aus einem Farbpigment und einer Glasfritte bestehen, verwendet.

Farbkörper vom Spinelltyp werden aufgrund ihrer häufig brillanten Farben schon lange zur Kolorierung von Glasuren sowie als Bestandteil von Dekorfarben verwendet. Bei im Spinelltypus kristallisierenden Farbkörpern, bespielhaft seien Thenards-Blau ($CoAl_2O_4$) und Kupferchromit ($CuCr_2O_4$) genannt, handelt es sich meist um sehr farbintensive Pigmente. Farbpigmente vom Spinelltypus sind im allgemeinen in Gegenwart eines aggressiven Glasflusses hinsichtlich ihrer Farbe weitgehend stabil, nachteilig ist jedoch der sogenannte Ausblutungseffekt. Durch die Wechselwirkung des Pigments mit dem Glasfluß wird das Pigment mehr oder weniger stark angelöst, d. h. Bestandteile des Pigments wandern in den ihn umgebenden Glasfluß und färben diesen. Dieses "Ausbluten" verhindert die Herstellung konturenscharfer Dekore. Gerade beim Co-haltigen Spinell $CoAl_2O_4$ macht sich dieser Effekt stark bemerkbar.

Um das Problem des Ausblutens und/oder anderer Instabilitäten während des Einbrennens zu vermeiden, wurden derartige Farbkörper bereits in durchsichtige Kristalle von glasurstabilen Substanzen eingeschlossen - siehe DE-AS 23 12 535. In diesen Dokument wird auch ausgeführt, daß durch Erhitzen eines Gemisches von Zirkonoxid, Siliziumdioxid und feinteiligem Thenards-Blau ein hellblaues Einschlußpigment zugänglich ist. Somit ist der Einschluß von Spinell-Farbkörpern in glasurstabilen, farblosen Zirkoniumsilikatkristallen möglich, jedoch gelangt man auf diese Weise nur zu sehr farbschwachen Einschlußpigmenten.

Aufgabe der Erfindung ist somit, umhüllte Spinell-Farbpigmente aufzuzeigen, welche eine höhere Farbintensität aufweisen als die in Zirkoniumsilikatkristallen eingeschlossenen farbigen Spinelle. Gegenüber den nicht umhüllten Spinell-Farbpigmenten sollten die neuen Pigmente beim Einbrennen nicht oder zumindest wesentlich weniger stark ausbluten und damit die Herstellung von Dekoren mit verbesserter Konturenschärfe gestatten.

Die erfindungsgemäßen umhüllten Spinell-Farbpigmente sind gekennzeichnet durch einen Kern aus einem farbigen Spinell und einer diesen Kern zumindest teilweise umhüllenden glasigen Schicht aus einem silikatischen Material, das im wesentlichen aus Siliziumdioxid und einem oder mehreren Oxiden aus der Reihe der Alkali-, Erdalkali- und/oder Erdmetalloxiden besteht und zusätzlich aus dem umhüllten Spinell stammende Ionen enthalten kann.

Auf den Kern der neuen Farbpigmente entfallen vorzugsweise 45 bis 60 Gew.-%, auf die Hülle 55 bis 40 Gew.-%. Prinzipiell sind auch Pigmente außerhalb dieser Grenzen erhältlich, jedoch werden Produkte mit einem höheren Hüllanteil blasser, und Produkte mit einem höheren Kernanteil zeigen eine geringere Resistenz gegen das Ausbluten. Die erfindungsgemäßen umhüllten Spinell-Farbpigmente stellen ein feines Pulver dar. Die Korngröße (D50-Wert) der Pigmente liegt im allgemeinen oberhalb etwa 1 μm und unterhalb 20 μm; in der Praxis werden jedoch Pigmente mit einem D50-Wert unter 10 μm, insbesondere unter 5 μm, bevorzugt.

Die umhüllten Spinell-Farbpigmente enthalten als Kern einen farbigen Spinell der allgemeinen Formel $XY_2O_4$ oder $X_2ZO_4$, wobei X für ein zweiwertiges Element aus der Reihe Mn, Fe, Co, Ni, Cu, Zn, Mg steht, Y für ein dreiwertiges Metall aus der Reihe Al, Cr, Fe, Mn und Z für Ti. In einem Spinell können auch zwei unterschiedliche X-Metalle und/oder zwei unterschiedliche Y-Metalle enthalten sein. Beispielhaft werden genannt $CoAl_2O_4$, $(Co,Zn)Al_2O_4$, $Co(Al,Cr)_2O_4$, $CoCr_2O_4$, $Co_2TiO_4$, $CuCr_2O_4$, $NiFe_2O_4$, $(Fe,Zn)Fe_2O_4$, $(Fe,Mn)(Fe,Mn)_2O_4$. Die kobaltenthaltenden Spinelle werden besonders bevorzugt, denn hier ist das Ausbluten besonders störend. Mit Spinellen mit geringerer und/oder optisch weniger störender Ausblutungsneigung als den Co-haltigen Spinellen können ggf. auch ohne die erfindungsgemäße Umhüllung Dekore mit akzeptabler Konturenschärfe erhalten werden.

Eine hohe Ausblutungsresistenz weisen solche Pigmente auf, deren Spinellkern möglichst vollständig umhüllt ist. Mit abnehmendem Umhüllungsgrad nimmt verständlicherweise die Ausblutungsresistenz ab. Durch intensives Mahlen der zunächst weitgehend umhüllten Spinell-Farbpigmente werden Bruchstellen erzeugt, durch welche der farbgebende Spinell während des Brandes des keramischen Dekors ausbluten kann. Bei der Herstellung der erfindungsgemäß umhüllten Spinell-Farbpigmente durch den erfindungsgemäßen Sinterprozeß wird man vorzugsweise von Spinellen mit einer solchen Korngröße ausgehen, daß zum Erhalt der gewünschten Pigmentfeinheit ein schonendes Mahlen des gesinterten Produktes ausreicht.

Die Umhüllung besteht aus einem silikatischen Material und weist eine glasige, d. h. röntgenamorphe Struktur auf. Die Bestandteile der Umhüllung sind im wesentlichen $SiO_2$ sowie ein oder mehrere Oxide aus der Reihe der Alkali-, Erdalkali- und/oder Erdmetalloxide. Zusätzlich können Ionen aus dem umhüllten Spinell während der Herstellung der erfindungsgemäßen Farbpigmente in die silikatische Schicht derselben eingedrungen sein. Unter dem Begriff "im wesentlichen" wird verstanden, daß mindestens 95 Gew.-% der umhüllenden Schicht aus den vorgenannten Komponenten bestehen, jedoch bis zu 5 Gew.-% andere übliche Glasbestandteile in der silikatischen Hülle eingebaut sein können. Als basische Oxide enthält die Umhüllung im allgemeinen ein oder mehrere Oxide aus der Reihe $Li_2O$, $Na_2O$, $K_2O$, $MgO$, $CaO$ und $Al_2O_3$, wobei Alkalioxide und hier insbesondere $K_2O$ bevorzugt sind. Bei der den Spinellkern umhüllende silikatische Schicht handelt es sich vorzugsweise um ein sehr $SiO_2$-reiches Glas, das den gewünschten hohen Erweichungspunkt und damit eine hohe Resistenz gegenüber dem Glasfluß aufweist. Bestandteile, welche bekanntermaßen die Erweichungstemperatur von Gläsern herabsetzen, wie beispielsweise Bleioxid und Borsäure, sind in der silikatischen Umhüllung nicht oder nur in geringer Menge enthalten.

Die erfindungsgemäßen Spinell-Farbpigmente lassen sich in einfacher Weise dadurch herstellen, daß man ein homogenes Pulvergemisch aus dem farbigen Spinell, Siliziumdioxid und mindestens einem Mineralisator aus der Reihe der Alkali-, Erdalkali- und/oder Erdmetallhalogenide bei 900 bis 1300 °C 0,5 bis 5 Stunden sintert und das gesinterte Produkt, soweit erforderlich, naß oder trocken aufmahlt. Das Atomverhältnis von Silizium zu Alkalimetall in der silikatischen Schicht von unter Verwendung von Alkalichlorid als Mineralisator erhaltenen umhüllten Spinell-Farbpigmenten liegt im Bereich von etwa 6 zu 1 bis 60 zu 1, vorzugsweise etwa 20 bis 30 zu 1. Nur ein kleinerer Teil des im Verfahren anwesenden Alkaliions wird in das silikatische Netzwerk eingebaut; der größere Teil läßt sich mit Wasser aus dem Pigment auswaschen.

Der eingesetzte Spinell und vorzugsweise auch die übrigen Bestandteile werden in feinverteilter Form - D50-Wert 0,1 bis 20 µm, vorzugsweise 0,5 bis 10 µm - eingesetzt. Besonders bevorzugt weist der zu umhüllende Spinell einen D50-Wert von 0.5 bis 2 µm auf; bei geeigneter Auswahl der Umhüllungskomponenten und Führung des Sinterprozeßes gelangt man nach schonendem Aufmahlen des gesinterten Produktes zu umhüllten Pigmenten mit einem D50-Wert um 2 bis 5 µm.

Das zu sinternde Produkt besteht im allgemeinen aus 25 bis 60 Gew.-% des farbigen Spinells, 25 bis 60 Gew.-% Siliziumdioxid und 5 bis 40 Gew.-% Mineralisator. Vorzugsweise wird man die Pulverbestandteile in einer solchen Menge einsetzen, daß hieraus Pigmente resultieren, deren Spinellkern 45 bis 60 Gew.-% ausmacht. Als Mineralisatoren können die Halogenide, vorzugsweise Chloride, der Alkali-, Erdalkali-und/oder Erdmetalle verwendet werden.

Ein besonders bevorzugtes Pulvergemisch besteht aus 33 bis 45 Gew.-% Siliziumdioxid, 13 bis 23 Gew.-% Kaliumchlorid, und 42 bis 50 Gew.-% farbigem Spinell, insbesondere $CoAl_2O_4$. Während des Sinterprozeßes in Gegenwart von Luftsauerstoff und/oder Feuchtigkeit wird im Falle der Verwendung von Halogeniden als Mineralisator das Halogen ganz oder teilweise abgespalten, so daß das resultierende Metalloxid Bestandteil der silikatischen Umhüllung werden kann.

Die optimale Sintertemperatur und Sinterdauer sowie die Aufheizrate zum Erreichen der Sintertemperatur wird der Fachmann durch orientierende Versuche ermitteln. Das gesinterte Material wird, sofern erforderlich, schonend gemahlen und kann auch einer an sich bekannten nassen Nachbehandung zugeführt werden, um lösliche Mineralisatorbestandteile aus dem umhüllten Pigment herauszulösen.

Die erfindungsgemäßen umhüllten Spinell-Farbpigmente sind im Gegensatz zu den vorbekannten Einschlußpigmenten sehr farbintensiv und weisen eine hohe Ausblutungsresistenz auf. Sie lassen sich daher in vorzüglicher Weise zur Herstellung farbintensiver konturenscharfer keramischer Dekore verwenden. Je nach Auswahl des den Kern bildenden Spinells gelangt man in einfacher Weise zu blauen, grünen, braunen, grauen oder schwarzen umhüllten Spinell-Farbpigmenten mit hoher Ausblutungsresistenz.

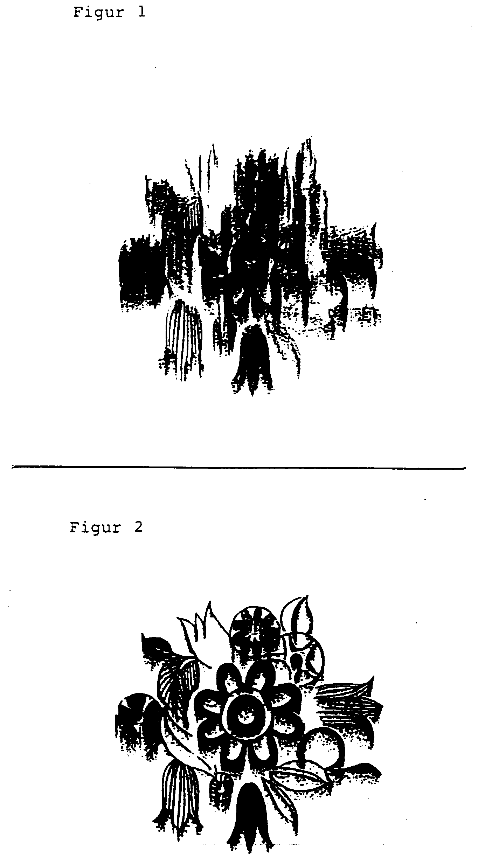

In Figur 2 ist ein Dekor unter Verwendung eines erfindungsgemäßen umhüllten $CoAl_2O_4$-Farbpigments abgebildet, in Figur 1 das gleiche Dekor unter Verwendung des reinen $CoAl_2O_4$-Pigments. Das Pigment wurde jeweils in einem Siebdrucköl angepastet; der Auftrag erfolgte mittels Siebdruck auf eine mit einer Transparentglasur (39.9 % PbO; 0,5 % $Na_2O$; 1,3 % $K_2O$; 0,2 % MgO; 4,7 % CaO; 7,1 % $Al_2O_3$; 39,7 % $SiO_2$; 6,6 % $B_2O_3$ - jeweils Gew.-%) versehene Prüfplatte. Gebrannt wurde im sogenannten Schrägbrand, da bei schräger Positionierung während des Brandes das Ausblutungsverhalten eines Pigments am deutlichsten wahrgenommen werden kann. Der Vergleich der beiden Dekore zeigt die Überlegenheit der erfindungsgemäßen Pigmente.

Die Vergütung von Pigmentoberflächen durch Aufbringen einer auf den Anwendungszweck abgestimmten Schutzschicht ist an sich lange bekannt. In der DE-OS 36 43 247 wird beispielsweise ein Verfahren zur Verbesserung der anwendungstechnischen Eigenschaften eines Wismutvanadat/Molybdat-Pigments beschrieben, wobei auf das Pigment eine Schicht aus einem Alkalimetallsilikat oder Erdalkalimetallsilikat aufgebracht und anschließend mit einer Wachsemulsion überdeckt wird. Bei der silikatischen Schicht dieses umhüllten Pigments handelt es sich jedoch nicht um eine glasige Schicht. In Kenntnis der Ausblutungseigenschaften der Spinelle in Gegenwart von Glasflüssen war es völlig überraschend, daß durch Umhüllen des farbigen Spinells mit einem Material der erfindungsgemäßen Zusammensetzung das Ausblutungsverhalten wesentlich verbessert werden konnte. Die erfindungsgemäßen umhüllten Spinell-Farbpigmente lassen sich daher sehr gut zur Herstellung konturenscharfer Dekore unter Verwendung üblicher Druckverfahren oder mittels Abziehbilder herstellen. Das Pigment kann hierbei als Bestandteil einer Dekorfarbe oder in üblichen organischen Druckmedien zur Anwendung gelangen.

Beispiele 1 bis 6

Pulvergemische der in der Tabelle angegebenen Zusammensetzungen wurden nach Homogenisierung bei 1000 °C 2 Stunden gesintert. Nach dem Sinterprozeß wurde 5 Minuten aufgemahlen. Die Eigenschaften des von erfindungsgemäß hergestellten umhüllten Spinell-Farbpigmenten enthaltenden und, wie oben beschrieben, aufgebrachten und im Schrägbrand eingebrannten Dekors hinsichtlich Farbintensität und Konturenschärfe folgen aus der Tabelle.

TABELLE

| Beispiel | 1 | 2 | 3 | 4 | 5 | 6 |
|---|---|---|---|---|---|---|
| | Zusammensetzung des Pulvergemisches (Gew.-%) | | | | | |
| $CoAl_2O_4$ | 49,3 | 53,5 | 35,5 | 35,4 | 42,3 | 43,6 |
| $SiO_2$ | 37,7 | 40,9 | 27,1 | 51,6 | 44,7 | 33,4 |
| KCl | 13,0 | 5,6 | 37,4 | 13,0 | 13,0 | 23,0 |
| Farb-intensität *) | +++ | +++ | + | + | +++ | +++ |
| Ausblutungs-resistenz *) | +++ | ++ | + | ++ | +++ | ++ |

*) hoch   +++
   mittel   ++
   gering   +

EP 0 455 933 B1

**Patentansprüche**

1. Umhüllte Spinell-Farbpigmente, gekennzeichnet durch einen Kern aus einem farbigen Spinell und einer diesen Kern zumindest teilweise umhüllenden glasigen Schicht aus einem silikatischen Material, das im wesentlichen aus Siliziumdioxid und einem oder mehreren Oxiden aus der Reihe der Alkali-, Erdalkali- und/oder Erdmetalloxide besteht und zusätzlich aus dem umhüllten Spinell stammmende Ionen enthalten kann.

2. Umhüllte Spinell-Farbpigmente nach Anspruch 1,
dadurch gekennzeichnet,
daß sie aus 45 bis. 60 Gew.-% farbigem Spinell, insbesondere einem Spinell mit blauer, grüner, brauner, grauer oder schwarzer Farbe, und 55 bis 40 Gew.-% glasiger Umhüllung bestehen, wobei das silikatische Hüllmaterial im wesentlichen aus Siliziumdioxid und Alkalioxiden, insbesondere Kaliumoxid, besteht und das Atomverhältnis von Silizium zu Alkalimetall im Bereich von 6 zu 1 bis 60 zu 1, vorzugsweise 20 bis 30 zu 1, liegt.

3. Verfahren zur Herstellung von umhüllten Spinell-Farbpigmenten nach Anspruch 1 oder 2,
dadurch gekennzeichnet,
daß man ein homogenes Pulvergemisch aus dem farbigen Spinell, Siliziumdioxid und mindestens einem Mineralisator aus der Reihe der Alkali-, Erdalkali- und/oder Erdmetallhalogenide bei 900 bis 1300 °C 0,5 bis 5 Stunden sintert und das gesinterte Produkt, soweit erforderlich, naß oder trocken aufmahlt.

4. Verfahren nach Anspruch 3,
dadurch gekennzeichnet,
daß man ein Pulvergemisch einsetzt, das aus 25 - 60 Gew.-% des farbigen Spinells, 25 - 60 Gew.-% Siliziumdioxid und 5 - 40 Gew.-% Mineralisator besteht und der D50-Wert des eingesetzten Spinells und vorzugsweise auch der D50-Wert der anderen Bestandteile im Bereich von 0,5 bis 10 $\mu$m liegt.

5. Verfahren nach den Ansprüchen 3 oder 4,
dadurch gekennzeichnet,
daß man ein Pulvergemisch einsetzt, das aus 33 - 45 Gew.-% Siliziumdioxid, 13 - 23 Gew.-% Kaliumchlorid und 42 - 50 Gew.-% farbigem Spinell, insbesondere $CoAl_2O_4$, besteht.

6. Verwendung der umhüllten Spinell-Farbpigmente der Ansprüche 1 oder 2 zur Herstellung konturenscharfer keramischer Dekore.

**Claims**

1. Coated coloured spinel pigments, characterized by a core of a coloured spinel and a glass-like layer of a silicate material which at least partly surrounds the core, consists essentially of silicon dioxide and one or more oxides from the series of alkali metal, alkaline earth metal and/or earth metal oxides and may additionally contain ions emanating from the coated spinel.

2. Coated coloured spinel pigments as claimed in claim 1, characterized in that they consist of 45 to 60% by weight of coloured spinel, more particularly a spinel with a blue, green, brown, grey or black colour, and 55 to 40% by weight of the glass-like coating, the silicate coating material consisting essentially of silicon dioxide and alkali metal oxides, more particularly potassium oxide and the atomic ratio of silicon to alkali metal being in the range from 6:1 to 60:1 and preferably in the range from 20 to 30:1.

3. A process for the production of the coated coloured spinel pigments claimed in claim 1 or 2, characterized in that a homogeneous powder mixture of the coloured spinel, silicon dioxide and at least one mineralizer from the series of alkali metal, alkaline earth metal and/or earth metal halides is sintered for 0.5 to 5 hours at 900 to 1300°C and, if necessary, the sintered product is subjected to wet or dry grinding.

4. A process as claimed in claim 3, characterized in that a powder mixture consisting of 25 to 60% by weight of the coloured spinel, 25 to 60% by weight of silicon dioxide and 5 to 40% by weight of mineralizer is used and the D50 value of the spinel used and preferably the D50 value of the other constituents is in the range from 0.5 to 10 $\mu$m.

5. A process as claimed in claim 3 or 4, characterized in that a powder mixture consisting of 33 to 45% by weight of silicon dioxide, 13 to 23% by weight of potassium chloride and 42 to 50% by weight of coloured spinel, more particularly $CoAl_2O_4$, is used.

6. The use of the coated coloured spinel pigments claimed in claim 1 or 2 for the production of ceramic decorations with high-definition contours.

## Revendications

1. Pigments colorants de spinelle enveloppés, caractérisés par un noyau de spinelle coloré et une couche vitreuse d'un matériau silicaté entourant au moins partiellement ce noyau, matériau qui est constitué essentiellement de dioxyde de silicium et d'un ou plusieurs oxydes de la série des oxydes de métaux alcalins et ou alcalino-terreux et/ou de métaux terreux et peut contenir en plus des ions provenant du spinelle enveloppé.

2. Pigments colorants de spinelle selon la revendication 1, caractérisés en ce qu'ils sont constitués de 45 à 60 % en poids de spinelle coloré, en particulier d'un spinelle de couleur bleue, verte, brune, grise ou noire et de 55 à 40 % en poids d'enveloppe vitreuse, dans laquelle le matériau d'enveloppe silicaté se compose essentiellement de dioxyde de silicium et d'oxydes alcalins, en particulier d'oxyde de potassium et dans laquelle le rapport atomique du silicium ou métal alcalin se situe dans la zone de 6 à 1 jusqu'à 60 à 1, de préférence de 20 - 30 à 1.

3. Procédé pour préparer des pigments colorants de spinelle enveloppés selon les revendications 1 ou 2, caractérisé en ce qu'on fritte un mélange pulvérulent homogène de la spinelle colorée, de dioxyde de silicium et d'au moins un minéralisateur de la série des halogénures de métal alcalin, alcalino-terreux et/ou de métal terreux entre 900 et 1300°C pendant 0,5 à 5 heures et on broie le produit fritté, autant que nécessaire, à l'état humide ou sec.

4. Procédé selon la revendication 3, caractérisé en ce qu'on met en oeuvre un mélange pulvérulent, qui contient 25 - 60 % en poids du spinelle coloré, 25 - 60 % en poids de dioxyde de silicium et 5 - 40 % en poids de minéralisateur et la valeur D 50 des autres composants se situe de préférence dans la zone de 0,5 à 10 µm.

5. Procédé selon les revendications 3 ou 4, caractérisé en ce qu'on met en oeuvre un mélange pulvérulent, qui se compose de 33 - 45 % en poids de dioxyde de silicium, de 13 - 23 % en poids de chlorure de potassium et de 42 - 50 % en poids de spinelle coloré, en particulier $CaAl_2O_4$.

6. Utilisation des pigments colorés de spinelle enveloppés des revendications 1 ou 2 pour préparer des décorations de céramique à contours net.

Figur 1

Figur 2